# EUROPÄISCHE PATENTSCHRIFT

(11) **EP 3 210 709 B1**
(45) Veröffentlichungstag und Bekanntmachung des Hinweises auf die Patenterteilung: **01.08.2018**
(21) Anmeldenummer: 17150862.5
(22) Anmeldetag: 10.01.2017
(51) Int. Cl.: B23K 20/10, B23K 37/02, B29C 65/08, B29C 65/74, B29C 65/00, G01N 3/16, B23K 103/00

(54) **ULTRASCHALL-BEARBEITUNGSMASCHINE**
ULTRASOUND PROCESSING MACHINE
MACHINE D'USINAGE À ULTRASONS

(30) Priorität: 08.02.2016 DE 102016102164
(43) Veröffentlichungstag der Anmeldung: 30.08.2017
(73) Patentinhaber: MS Ultraschall Technologie GmbH, 78549 Spaichingen (DE)
(72) Erfinder: Raszillier, Roland, 78166 Donaueschingen (DE); Krell, Volker, 78579 Neuhausen (DE)
(74) Vertreter: Manitz Finsterwald Patentanwälte PartmbB

(56) Entgegenhaltungen:
- JP-A- H04 250 334
- JP-A- H11 281 566
- JP-A- 2001 118 887
- US-A- 5 269 103
- US-A- 5 726 417

## Beschreibung

Die vorliegende Erfindung betrifft eine Ultraschall-Bearbeitungsmaschine nach dem Oberbegriff des Anspruchs 1 (siehe US 5 788 791 A), deren als Arbeitsorgan dienende Sonotrode mittels eines Linearantriebs in Längsrichtung des Ständers verfahrbar ist.

Derartige Bearbeitungsmaschinen können eine Grundplatte zur Aufnahme eines mit der Werkzeugmaschine zu bearbeitenden Werkstücks und einen Ständer umfassen, entlang dessen das Arbeitsorgan verschieblich geführt ist. Hierzu ist ein entlang der Längsrichtung des Ständers verschieblich geführter Schlitten vorgesehen, der einen Schwingungsgenerator trägt, mit dem eine als Arbeitsorgan dienende Sonotrode zu hochfrequenten Schwingungen angeregt werden kann. Wird der Schlitten mittels des Linearantriebs in Längsrichtung verfahren, bis die Sonotrode mit dem zu schweißenden Werkstück in Anlage gelangt, kann mittels des Linearantriebs über die Sonotrode eine gewünschte Schweißkraft auf das Werkstück aufgebracht werden, die es je nach Anwendungsfall auf eine bestimmte Größe einzustellen gilt, wozu eine entsprechend ausgebildete Kraftregelung vorgesehen sein kann.

Für eine solche Kraftregelung ist die Bearbeitungsmaschine mit einer Steuerung versehen, die den Antrieb und den Schwingungsgenerator steuert, wobei mit Hilfe einer Kraftmesseinrichtung und einer Wegmesseinrichtung, welche mit der Steuerung in Verbindung stehen, der Antrieb des Schlittens und der Schwingungsgenerator so angesteuert werden können, dass das Arbeitsorgan mit einem gewünschten Kraftverlauf gegen das Werkstück angestellt und dabei betätigt wird. Weiterhin ist eine Ausgabeeinrichtung zur Ausgabe von Betriebsparametern vorgesehen, um beispielsweise die Dauer der Bearbeitung, die eingebrachte Energie, die aufgebrachte Schweißkraft etc. ausgeben oder darstellen zu können.

Mit einer Ultraschall-Bearbeitungsmaschine der vorstehend beschriebenen Art können beispielsweise Kunststoffbauteile miteinander verschweißt werden, wobei es zur Qualitätssicherung erforderlich ist, dass die verschweißten Bauteile zumindest stichprobenartig auf die Qualität der Schweißverbindung hin untersucht werden. Hierzu werden die Bauteile üblicherweise in eine Zugprüfvorrichtung eingespannt, in welcher die Haltekraft der Schweißverbindung mittels Zugprüfung überprüft wird.

Aus der JPH11281566 ist ein Testverfahren bekannt, bei dem eine Elektrode mit einem Greifer gegriffen wird, der anschließend die Elektrode von einem Substrat abzieht. Aus der JPH04250334 ist eine Zugprüfvorrichtung für geschweißte Streifenabschnitte bekannt.

Der Erfindung liegt die Aufgabe zugrunde, eine Ultraschall-Bearbeitungsmaschine nach dem Oberbegriff des Anspruchs 1 dahingehend weiterzubilden, dass auf einfachste Weise kostengünstig und zeitsparend eine Zugprüfung von miteinander verschweißten Bauteilen möglich ist.

Die Lösung dieser Aufgabe erfolgt durch die Merkmale des Anspruchs 1 und insbesondere dadurch, dass eine an dem Schlitten vorgesehene Aufnahmeeinrichtung vorgesehen ist, in die eine erste Werkstückhalterung einsetzbar ist. Mit der ersten Werkstückhalterung, die in die Aufnahmeeinrichtung einsetzbar ist, kann das zuvor verschweißte Werkstück, das zwei Komponenten umfasst, an der ersten Komponente befestigt werden. Weiterhin ist eine an der Grundplatte oder an dem Ständer befestigbare zweite Werkstückhalterung vorgesehen, mit der die zweite Komponente des Werkstücks für die Zugprüfung gehalten werden kann.

Auf diese Weise ist es möglich, nach dem Zusammenschweißen der beiden Komponenten des Werkstücks an jeder Komponente eine der beiden Werkstückhalterungen anzubringen, so dass eine Komponente über die erste Werkstückhalterung mit dem Schlitten verbunden ist und die andere Komponente über die zweite Werkstückhalterung mit der Grundplatte oder dem Ständer so verbunden ist, dass durch Kraftbeaufschlagung eine Zugprüfung erfolgen kann. Erfindungsgemäß ist die Steuerung so ausgebildet und eingerichtet, dass manuell und/oder automatisch zwischen einem Bearbeitungszyklus und einem Zugprüfzyklus umgeschaltet werden kann.

Unter einem Bearbeitungszyklus wird ein Arbeitsablauf verstanden, bei dem Materialien miteinander verschweißt, getrennt und/oder versiegelt werden. Unter einem Zugprüfzyklus wird eine Betriebsweise der Bearbeitungsmaschine verstanden, bei der die Steuerung den Antrieb des Schlittens so ansteuert, dass ein verschweißtes Werkstück, dessen beide Komponenten mit den beiden Werkstückhalterungen verbunden sind, auf Zug beansprucht werden kann, wobei der bei der Zugbeanspruchung auftretende Kraft-Wegverlauf von der Kraftmesseinrichtung und der Wegmesseinrichtung aufgezeichnet wird. Auf diese Weise kann durch den Zugprüfzyklus eine Zugprüfung des Werkstücks erfolgen und es kann festgestellt und ausgegeben werden, ob die Zugprüfung den Anforderungen genügt, d.h. ob die zuvor hergestellte Schweißverbindung zufriedenstellend ist.

Vorteilhafte Ausführungsformen der Erfindung sind in der Beschreibung, der Zeichnung sowie den Unteransprüchen beschrieben.

Nach einer ersten vorteilhaften Ausführungsform kann die Werkstückhalterung in die Aufnahmeeinrichtung einsetzbar sein, ohne dass das Arbeitsorgan entfernt werden muss. Auf diese Weise kann die Bearbeitungsmaschine nach einem Bearbeitungszyklus auf einfachste Weise zur Zugprüfung vorbereitet werden, indem die erste Werkstückhalterung in die an dem Schlitten vorgesehene Aufnahmeeinrichtung eingesetzt wird. Anschließend muss die erste Werkstückhalterung lediglich mit einer Komponente des verschweißten Werkstücks verbunden werden und die andere Komponente muss mit der an der Grundplatte oder an dem Ständer befestigten zweiten Werkstückhalterung gekoppelt werden, um das Werkstück auf Zug zu beanspruchen.

Grundsätzlich ist es ausreichend, wenn die Ultraschall-Bearbeitungsmaschine mit ihrem Ständer relativ zu einer Grundplatte positioniert ist, die ortsfest ist, beispielsweise relativ zu einer bereits vorhandenen Arbeitsplatte oder Arbeitsfläche. Es kann jedoch auch vorteilhaft sein, wenn der Ständer zusammen mit einer Grundplatte vorgesehen und mit dieser verbunden ist, so dass die Bearbeitungsmaschine portabel ist.

Mit der erfindungsgemäßen Bearbeitungsmaschine kann nicht nur auf eine separate Zugprüfmaschine vollständig verzichtet werden. Vielmehr ist es auch möglich, durch geeignete Ausbildung der Steuerung eine vereinfachte Qualitätskontrolle zu erzielen. So kann nach einer weiteren vorteilhaften Ausführungsform die Steuerung so ausgebildet und eingerichtet sein, dass diese in festlegbaren Intervallen automatisch zwischen einem Bearbeitungszyklus und einem Zugprüfzyklus umschaltet. Auf diese Weise kann durch die Steuerung zwangsweise vorgesehen werden, dass in einem gewünschten Intervall nach einer Bearbeitung, d.h. einem Verschweißen von zwei Komponenten eines Werkstücks, eine Zugprüfung erfolgt.

Die Länge eines Intervalls kann nach einer weiteren vorteilhaften Ausführungsform durch die Anzahl an hintereinander bearbeiteten Werkstücken festlegbar sein. So kann beispielsweise die Steuerung so ausgebildet und eingerichtet sein, dass grundsätzlich eine Zugprüfung nach beispielsweise 25 erfolgten Schweißungen erfolgt.

Nach einer weiteren vorteilhaften Ausführungsform kann die Länge eines Intervalls von der Steuerung zufallsgesteuert festlegbar sein. So kann eine Zugprüfung nach einer zufälligen Anzahl von Bearbeitungszyklen bzw. Schweißvorgängen oder aber nach einer zufällig ausgewählten Zeitdauer vorgesehen werden. Auch ist es möglich, dass die Steuerung so ausgebildet und eingerichtet ist, dass beispielsweise pro Schicht zehn zufällig ausgewählte Teile einer Zugprüfung unterworfen werden müssen, indem die Bearbeitungsmaschine nach dem Verschweißen dieser Teile auf einen Zugprüfzyklus umschaltet. Die Bearbeitung weiterer Teile ist dann nur möglich, wenn die Zugprüfung des zuvor verschweißten Teils durchgeführt worden ist.

Nach einer weiteren vorteilhaften Ausführungsform kann die Steuerung der Bearbeitungsmaschine eine Eingabeeinrichtung aufweisen, mit der in Abhängigkeit von dem Ergebnis von zumindest einer Zugprüfung die weitere Betriebsweise der Bearbeitungsmaschine vorgebbar ist. Hierdurch kann die Reaktion der Bearbeitungsmaschine auf ein (negatives) Ergebnis einer Zugprüfung eingestellt bzw. ausgewählt werden. Beispielsweise kann die Bearbeitungsmaschine komplett gesperrt werden, wenn eine bestimmte Anzahl von negativen Zugprüfungen hintereinander durchgeführt wurde. Auch kann als weitere Betriebsweise der Bearbeitungsmaschine vorgegeben werden, dass diese zunächst im normalen Betrieb weiterarbeitet, bis der nächste Fehler auftritt. Auch ist es möglich, der Steuerung vorzugeben, dass das negative Ergebnis der Zugprüfung gelöscht bzw. ignoriert wird, wenn für einen bestimmten sich anschließenden Zeitraum, beispielsweise innerhalb von drei Stunden, kein weiterer Fehler bei einer Zugprüfung aufgetreten ist.

Nach einer weiteren vorteilhaften Ausführungsform kann die Steuerung so ausgebildet und eingerichtet sein, dass ein unzureichendes Ergebnis einer Zugprüfung ausgegeben wird, und dass in diesem Fall durch die Steuerung eine sich anschließende vorbestimmte Anzahl und Reihenfolge an Bearbeitungs- und Zugprüfzyklen vorgegeben wird, die ausgeführt werden müssen. Beispielsweise kann über die Steuerung eine Feststellung getroffen werden, wie bei Schlechtteilen weiter verfahren werden soll, die eine Zugprüfung nicht bestanden haben,. Beispielsweise kann vorgegeben werden, dass zunächst zwei weitere Teile verschweißt und geprüft werden, bis in einen normalen Betrieb zurückgekehrt wird.

Nach einer weiteren vorteilhaften Ausführungsform kann die Ausgabeeinrichtung der Bearbeitungsmaschine mit einem mobilen Bediengerät, insbesondere drahtlos, koppelbar sein. Auf diese Weise ist es möglich, Informationen aus der Bearbeitung und auch aus der Zugprüfung an ein mobiles Bediengerät zu übertragen, beispielsweise an ein Smartphone mit Hilfe einer App. Anschließend kann dann über das Smartphone oder über ein sonstiges Bediengerät von einem Bediener entschieden werden, wie nach einem Schlechtteil weiter verfahren wird.

Nach einer weiteren vorteilhaften Ausführungsform kann die Bearbeitungsmaschine in Abhängigkeit von Ergebnissen der Zugprüfung durch die Steuerung sperrbar sein. Auf diese Weise kann sichergestellt werden, dass keine unnötigen Schlechtteile produziert werden, wenn das Ergebnis einer Zugprüfung wiederholt negativ ausgefallen sein sollte.

Mit der erfindungsgemäßen Bearbeitungsmaschine lassen sich nicht nur die hohen Kosten einer ansonsten erforderlichen Zugprüfungsmaschine einsparen. Vielmehr kann auch in kürzester Zeit und auf einfachste Weise von einem Bearbeitungszyklus auf einen Zugprüfungszyklus umgestellt werden. Die Zusatzkosten für eine Zugprüfung sind dabei minimal, da an sich sämtliche Hardwarekomponenten bereits in der Bearbeitungsmaschine selbst vorhanden sind. Zusätzlich vorgesehen werden müssen lediglich eine entsprechende Anpassung der Steuerung sowie die erste und die zweite Werkstückhalterung, die mit dem Schlitten bzw. der Grundplatte oder dem Ständer koppelbar sind.

Nachfolgend wird die Erfindung rein beispielhaft unter Bezugnahme auf die beigefügten Figuren erläutert. Es zeigen:
- Fig. 1: eine perspektivische Darstellung einer erfindungsgemäßen Ultraschall-Bearbeitungsmaschine bei einem Bearbeitungszyklus;
- Fig.2: eine perspektivische der Ultraschall-Bearbeitungsmaschine von Fig. 1 bei einem Zugprüfzyklus; und
- Fig. 3: eine perspektivische Ansicht einer zweiten Ausführungsform einer Ultraschall-Bearbeitungsmaschine bei einem Zugprüfzyklus.

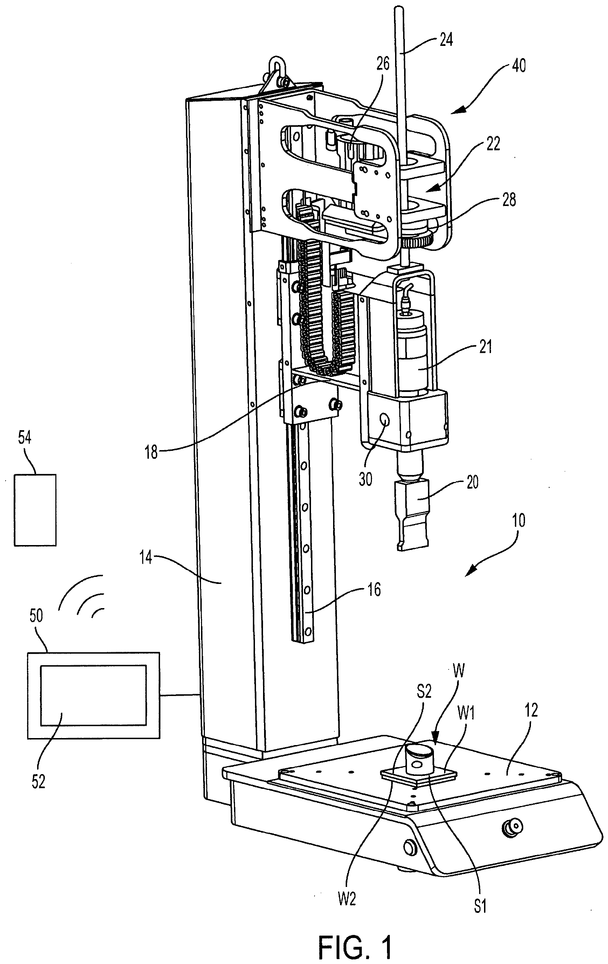

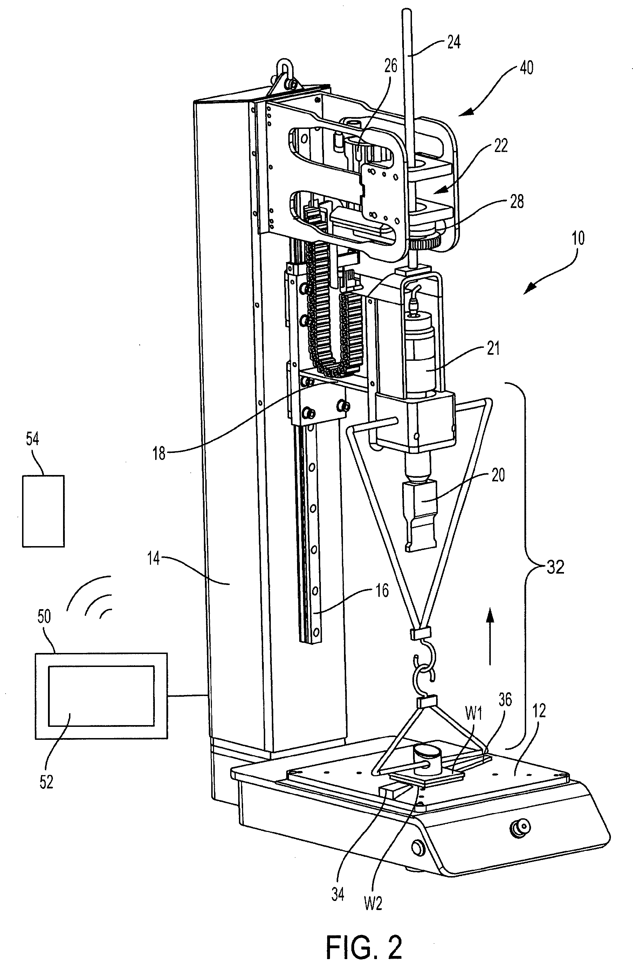

Die in den Fig. 1 und 2 dargestellte Ultraschall-Bearbeitungsmaschine 10 weist eine Grundplatte 12 auf, auf der ein zu schweißendes Werkstück angeordnet ist, und die biegesteif mit einem aufrecht stehenden Ständer 14 verbunden ist. Entlang der Längsrichtung des Ständers 14 ist eine Führungsschiene 16 an dem Ständer 14 befestigt, entlang derer ein rahmenartiger Schlitten 18 verschieblich geführt ist, welcher einen Schwingungsgenerator 21 trägt, mit dem eine als Arbeitsorgan dienende Sonotrode 20 zu hochfrequenten Schwingungen angeregt werden kann.

Um den Schlitten 18 samt Schwingungsgenerator 21 und Sonotrode 20 durch die Führungsschiene 16 geführt entlang des Ständers 14 verfahren zu können, ist bei dem beschriebenen Ausführungsbeispiel ein Linearantrieb 22 in Form eines Spindelantriebs vorgesehen, dessen Gewindespindel 24 derart an dem rahmenartigen Schlitten 14 aufrechtstehend angebracht ist, dass sich der Schwingungsgenerator 21 in der Flucht des Stellwegs des Linearantriebs 22, d.h. in der Spindelachse, befindet. Selbstverständlich sind auch andere Antriebe möglich. Der Linearantrieb 22 und insbesondere dessen Spindelmutter 28 wird bei der hier dargestellten Ausführungsform in der erfindungsgemäßen Art und Weise an einem in seiner Gesamtheit mit dem Bezugszeichen 40 bezeichneten rahmenartigen elastisch verformbaren Festkörpergelenk aus Stahl getragen, das seinerseits am freien Ende des Ständers 14 frei auskragend angebracht ist.

Zur Betätigung des Linearantriebs 22 ist ein Servomotor 26 vorgesehen, dessen Abtriebszahnrad über einen Riemen die Spindelmutter 28 antreibt, wozu diese entlang ihres Umfangs mit einer Außenverzahnung versehen ist.

Zur Steuerung der Bearbeitungsmaschine für Bearbeitungszyklen und auch für Zugprüfzyklen ist eine Steuerung 50 vorgesehen, die eine Eingabeeinrichtung und eine Ausgabeeinrichtung zur Eingabe und zur Ausgabe von Betriebsparametern aufweist, beispielsweise in Form eines Touchscreens 52. Die Steuerung steht dabei sowohl mit dem Antrieb 22 wie auch mit der Kraftmesseinrichtung und der Wegmesseinrichtung sowie mit dem Schwingungsgenerator 21 in Verbindung. Durch passende Eingabe der erforderlichen Betriebsparameter kann mit Hilfe der Steuerung jeder gewünschte Bearbeitungsvorgang vorgegeben und durchgeführt werden. Während eines Zugprüfzyklus sorgt die Steuerung dafür, dass der Schlitten 18 mit einer vorgegebenen Kraftkennlinie nach oben bewegt wird, wobei der von dem Schlitten zurückgelegte Weg durch die Steuerung ermittelt und aufgezeichnet wird. Mit der Steuerung können somit die Zugprüfvorgänge protokolliert, gespeichert, dargestellt und in Datenform ausgegeben werden.

Die Steuerung 50 ist weiterhin drahtlos mit einem mobilen Bediengerät 54, beispielsweise einem Smartphone, verbunden, mit dem über eine entsprechende App (Applikationssoftware) die Bearbeitungsmaschine ansteuerbar ist.

In Fig. 1 ist das auf der Grundplatte 12 befindliche Werkstück W rein schematisch dargestellt und umfasst eine erste Komponente W1, die mit einer zweiten Komponente W2 entlang zweier Schweißlinien S1 und S2 verschweißt wird. Zum Verschweißen der beiden Komponenten kann das Werkstück W mit nicht dargestellten Fixierelementen auf der Grundplatte 12 in seiner Position fixiert werden, so dass durch Absenken des Schlittens 18 mit Hilfe der Sonotrode 20 ein Verschweißen entlang der Schweißlinien S1 und S2 erfolgen kann.

Zum Verschweißen wird die Spindelmutter 28 mittels des Servomotors 26 angetrieben und hierdurch wird der Schlitten 18 einschließlich Schwingungsgenerator 21 und Sonotrode 20 abgesenkt bis die Sonotrode 20 mit der Komponente W1 des auf der Grundplatte 12 befindlichen Werkstücks in Anlage gelangt, wodurch mit Hilfe des Linearantriebs 22 über die Sonotrode 20 in der gewünschten Weise eine Schweißkraft auf das auf der Grundplatte 12 befindliche Werkstück aufgebracht werden kann, was insbesondere dann, wenn das Werkstück verhältnismäßig starr oder unnachgiebig ist, dazu führt, dass das rahmenartige Festkörpergelenk 40 in der gewünschten Weise eine elastische Verformung erfährt.

Da sich erfindungsgemäß der Schwingungsgenerator 21 mitsamt seiner Sonotrode 20 in der Flucht des Stellwegs des Linearantriebs 22 befindet, treten außer dieser elastischen Verformung des elastisch verformbaren Festkörpergelenks 40 keine oder nur geringe Verformungen im Kraftflusspfad zwischen Sonotrode 20 und Ständer 14 auf. Da sich auch das Arbeitsorgan 20 in der Flucht des Stellwegs des Linearantriebs 22 befindet, wird sichergestellt, dass es infolge einer Kraft, die mit Hilfe des Linearantriebs 22 über das Arbeitsorgan 20 auf ein auf der Grundplatte 12 positionierbares Werkstück aufgebracht wird, zu keinen unkontrollierten Biegeverformungen im Bereich des Linearantriebs 22 und/oder des Schwingungsgenerators 21 kommt. Andererseits wird durch das Festkörpergelenk 40 bewusst zugelassen, dass der Linearantrieb 22 im Rahmen bestimmter Grenzen seine Hubbewegung ab dem Zeitpunkt, zu dem das Arbeitsorgan 20 mit dem Werkstück in Anlage gelangt, fortsetzen kann, um so aus der ab diesem Zeitpunkt auftretenden Hubbewegung die auf das Werkstück aufgebrachte Kraft einregeln zu können, ohne dass es zu Überschwingungen kommt.

Wenn nach einem Bearbeitungszyklus, bei dem die beiden Komponenten W1 und W2 des Werkstücks W miteinander verschweißt worden sind, ein Zugprüfzyklus durchlaufen werden soll oder muss, so kann die in Fig. 1 dargestellte Bearbeitungsmaschine auf einfachste Weise in eine Zugprüfvorrichtung umgerüstet werden. Hierfür ist im Bereich des Schlittens eine erste Aufnahmeeinrichtung in Form zweier Bohrungen 30 (in Fig. 1 ist nur eine Bohrung erkennbar) vorgesehen, in die eine erste Werkstückhalterung 32 einsetzbar ist.

Fig. 2 zeigt die in die Aufnahmeeinrichtung 30 eingesetzte Werkstückhalterung 32, die bei dem dargestellten Ausführungsbeispiel rein beispielhaft zwei nur schematisch dargestellte dreieckförmige Bügel umfasst, wobei der in Fig. 2 obere Bügel mit zwei freien Schenkeln in die Aufnahmeeinrichtung 30 der Bearbeitungsmaschine 10 eingesetzt ist. Der in Fig. 2 untere Bügel ist durch eine Bohrung in der ersten Komponente W1 des Werkstücks hindurchgeführt und an den oberen Bügel mit Hilfe zweier Haken angekoppelt, so dass die erste Komponente W1 mit Hilfe des Antriebs 22 in Richtung des dargestellten Pfeils mit Kraft beaufschlagt werden kann.

Die zweite Komponente W2 des Werkstücks W ist an der Grundplatte 12 mit Hilfe zweier rein schematisch dargestellter Werkstückhalterungen 34 und 36 so fixiert, dass die Werkstückkomponente W2 fest an der Grundplatte gehalten ist. Auf diese Weise kann bei Beaufschlagen der ersten Werkstückkomponente W1 mit einer Zugkraft die zuvor hergestellte Schweißverbindung getestet werden, indem der Verlauf der aufgebrachten Zugkraft über dem Weg aufgezeichnet wird.

Wie aus Fig. 2 erkennbar ist, kann die erste Werkstückhalterung 32 auf einfache Weise in die Aufnahmeeinrichtung 30 der Bearbeitungsmaschine eingesetzt werden, ohne dass das Arbeitsorgan 20 in Form der Sonotrode entfernt werden müsste.

Bei Durchlaufen eines Zugprüfzyklus wird der Antrieb 22 durch die Steuerung 50 so angesteuert, dass dieser den Schlitten 18 mit einer vorgegebenen Zugkraft nach oben bewegt, wobei dabei mit Hilfe der Wegmesseinrichtung und der Kraftmesseinrichtung der Verlauf der Zugkraft über dem Weg ermittelt und aufgezeichnet wird. Sofern das Ergebnis voreingestellten Anforderungen genügt, wird über die Ausgabeeinrichtung 52 oder das Bediengerät 54 ein Signal abgegeben und/oder angezeigt bzw. gespeichert, das ein positives Durchlauft der Zugprüfung signalisiert. Sollte die Zugprüfung nicht den Anforderungen genügen, so wird dies ebenfalls ausgegeben bzw. signalisiert.

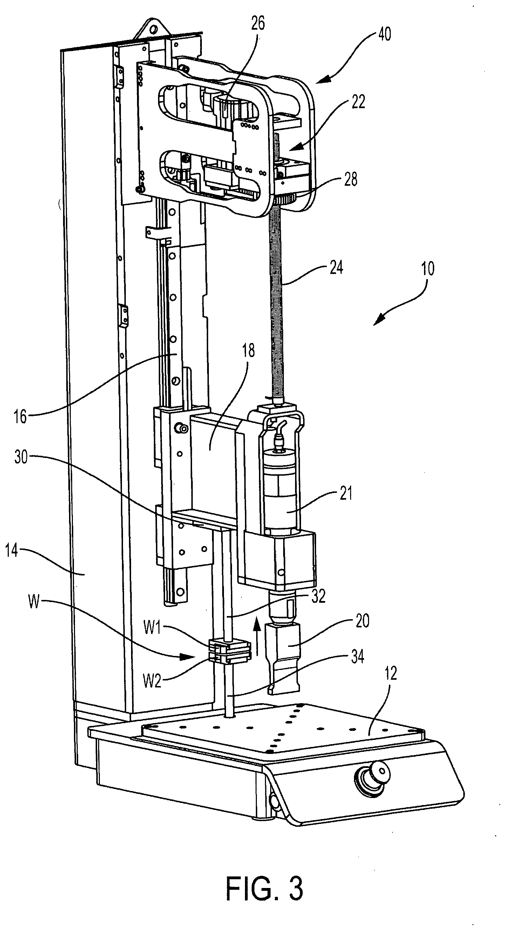

Die in Fig. 3 dargestellte zweite Ausführungsform einer Ultraschall-Bearbeitungsmaschine ist bis auf die Werkstückhalterungen zur Zugprüfung auf gleiche Weise wie die Ausführungsform der Fig. 1 und 2 ausgebildet, so dass bezüglich der grundsätzlichen Konstruktion auf die Beschreibung zu den Fig. 1 und Fig. 2 verwiesen werden kann.

Bei der in Fig. 3 dargestellten Ultraschall-Bearbeitungsmaschine sind das Werkstück W und die erste Werkstückhalterung 32 sowie die zweite Werkstückhalterung 34 in einem Freiraum angeordnet, der an der Unterseite von der Grundplatte 12, an der Oberseite von dem Schlitten 18, an der Rückseite von dem Ständer 14 und an der Vorderseite von dem Arbeitsorgan 20 begrenzt wird. Da in diesem Freiraum keinerlei Maschinenteile angeordnet sind, eignet sich dieser zur Anbringung bzw. Unterbringung der Werkstückhalterungen zur Zugprüfung.

Die erste Werkstückhalterung 32 zur Zugprüfung, die wiederum nur rein schematisch dargestellt ist, ist bei dieser Ausführungsform in eine Aufnahmeeinrichtung 30 eingesetzt, die sich an der Unterseite des Schlittens 18 befindet. Eine mit der ersten Werkstückhalterung im Wesentlichen fluchtende zweite Werkstückhalterung 34 ist an der Grundplatte 12 befestigt, könnte jedoch auch an dem Ständer 14 befestigt sein. Zur Zugprüfung ist ein aus zwei Komponenten W1 und W2 zuvor zusammengeschweißtes Werkstück W zwischen den beiden Werkstückhalterungen 32 und 34 angeordnet, wobei die erste Werkstückhalterung 32 die Komponente W1 und die zweite Werkstückhalterung die Komponente W2 hält. Durch Betätigen des Antriebs 22 kann dann eine Kraft auf das Werkstück W in Pfeilrichtung ausgeübt werden, so dass die Festigkeit der Schweißverbindung zwischen den Komponenten W1 und W2 auf Zug geprüft werden kann.

Bei den beiden Werkstückhalterungen 32 und 34 kann es sich in den einfachsten Fällen um Gewindestangen handeln, die mit ihren äußeren Enden in die Aufnahmeeinrichtung 30 bzw. die Grundplatte 12 eingeschraubt sind, wobei an den anderen Enden der beiden Gewindestangen Klemmeinrichtungen zum Halten der beiden Komponenten vorgesehen sein können.

Es versteht sich, dass auch bei der in Fig. 3 dargestellten Ausführungsform eine Steuerung 52 und ein Bediengerät 54 vorgesehen sind bzw. vorgesehen sein können, wie dies im Zusammenhang mit der Ausführungsform der Fig. 1 und Fig. 2 beschrieben wurde.

Im Übrigen ist die erfindungsgemäß vorgesehene Steuerung 50 so ausgebildet, wie dies in der Beschreibungseinleitung beschrieben wurde, so dass durch die Steuerung zwischen Bearbeitungszyklen und Zugprüfzyklen nach gewünschten Kriterien umgeschaltet werden kann.

### Bezugszeichenliste

- 10: Ultraschall-Bearbeitungsmaschine
- 12: Grundplatte
- 14: Ständer
- 16: Führungsschiene
- 18: rahmenartiger Schlitten
- 20: Arbeitsorgan/Sonotrode
- 21: Schwingungsgenerator
- 22: Linearantrieb
- 24: Spindel
- 26: Servomotor
- 28: Spindelmutter
- 30: Aufnahmeeinrichtung
- 32: erste Werkstückhalterung
- 34, 36: zweite Werkstückhalterung
- 40: elastisch verformbares Festkörpergelenk
- 50: Steuerung
- 52: Eingabe- und Ausgabeeinrichtung
- 54: Bediengerät

- S1: erste Schweißlinie
- S2: zweite Schweißlinie
- W: Werkstück
- W1: erste Komponente des Werkstücks
- W2: zweite Komponente des Werkstück

## Patentansprüche

1. Ultraschall-Bearbeitungsmaschine (10) zum Schweißen, Trennen und/oder Siegeln von Materialien, umfassend:
- eine Grundplatte (12);
- einen Ständer (14), der relativ zu der Grundplatte (12) positionierbar ist, auf der ein zu bearbeitendes Werkstück (W) fixierbar ist;
- einen Schwingungsgenerator (21), mit dem ein Arbeitsorgan (20) antreibbar ist;
- einen Schlitten (18), der den Schwingungsgenerator (21) trägt und der in Längsrichtung des Ständers (14) verschieblich geführt ist;
- einen Antrieb (22) für den Schlitten (18);
- eine Steuerung (50) zum Ansteuern des Antriebs (22) und des Schwingungsgenerators (21), die mit einer Kraftmesseinrichtung und einer Wegmesseinrichtung in Verbindung steht;
- eine Ausgabeeinrichtung (52) zur Ausgabe von Betriebsparametern;
**gekennzeichnet durch**:
- eine an dem Schlitten (18) vorgesehene Aufnahmeeinrichtung (30), in die eine erste Werkstückhalterung (32) einsetzbar ist,
- eine erste Werkstückhalterung (32), die in die Aufnahmeeinrichtung einsetzbar ist,
- eine an der Grundplatte (12) oder an dem Ständer (14) befestigbare zweite Werkstückhalterung (34, 36),
- wobei die Steuerung (50) so ausgebildet und eingerichtet ist, dass manuell und/oder automatisch zwischen einem Bearbeitungszyklus und einem Zugprüfzyklus umgeschaltet werden kann.

2. Bearbeitungsmaschine nach Anspruch 1,
**dadurch gekennzeichnet, dass**
die erste Werkstückhalterung (32) in die Aufnahmeeinrichtung (30) einsetzbar ist, ohne das Arbeitsorgan (20) zu entfernen.

3. Bearbeitungsmaschine nach Anspruch 1 oder 2,
**dadurch gekennzeichnet, dass**
der Ständer (14) mit der Grundplatte (12) verbunden ist.

4. Bearbeitungsmaschine nach Anspruch 1, 2 und/oder 3,
**dadurch gekennzeichnet, dass**
die Steuerung (50) eine Geschwindigkeitsregelung für den Antrieb (22) aufweist.

5. Bearbeitungsmaschine nach einem der vorstehenden Ansprüche,
**dadurch gekennzeichnet, dass**
die Steuerung (50) so ausgebildet und eingerichtet ist, dass diese in festlegbaren Intervallen automatisch zwischen einem Bearbeitungszyklus und einem Zugprüfzyklus umschaltet.

6. Bearbeitungsmaschine nach Anspruch 5,
**dadurch gekennzeichnet, dass**
die Länge eines Intervalls durch die Anzahl an hintereinander bearbeiteten Werkstücken (W) festlegbar ist.

7. Bearbeitungsmaschine nach Anspruch 5 und/oder 6,
**dadurch gekennzeichnet, dass**
die Länge eines Intervalls von der Steuerung (50) zufallsgesteuert festlegbar ist.

8. Bearbeitungsmaschine nach einem der vorstehenden Ansprüche,
**dadurch gekennzeichnet, dass**
die Steuerung (50) so ausgebildet und eingerichtet ist, dass diese während einer Bearbeitungsperiode für eine vorbestimmte Anzahl an Werkstücken (W) nach einem Bearbeitungszyklus in einen Zugprüfzyklus umschaltet.

9. Bearbeitungsmaschine nach einem der vorstehenden Ansprüche,
**dadurch gekennzeichnet, dass**
die Steuerung (50) eine Eingabeeinrichtung aufweist, mit der in Abhängigkeit von dem Ergebnis von zumindest einer Zugprüfung die weitere Betriebsweise der Bearbeitungsmaschine vorgebbar ist.

10. Bearbeitungsmaschine nach einem der vorstehenden Ansprüche,
**dadurch gekennzeichnet, dass**
die Steuerung (50) so ausgebildet und eingerichtet ist, dass ein unzureichendes Ergebnis einer Zugprüfung ausgebbar ist, und dass in diesem Fall durch die Steuerung eine sich anschließende vorbestimmte Anzahl und Reihenfolge an Bearbeitungs- und Zugprüfzyklen vorgegeben wird.

11. Bearbeitungsmaschine nach einem der vorstehenden Ansprüche,
**dadurch gekennzeichnet, dass**
die Ausgabeeinrichtung (52) mit einem mobilen Bediengerät (54), insbesondere drahtlos koppelbar ist.

12. Bearbeitungsmaschine nach einem der vorstehenden Ansprüche,
**dadurch gekennzeichnet, dass**
diese in Abhängigkeit von Ergebnissen der Zugprüfung durch die Steuerung (50) sperrbar ist.

## Claims

1. An ultrasound machine tool (10) for welding, separating and/or sealing materials, comprising:
- a base plate (12);
- a stand (14) that can be positioned relative to the base plate (12) on which a workpiece (W) to be machined can be fixed;
- a vibration generator (21) with which a working member (20) can be driven;
- a slide (18) that bears the vibration generator (21) and that is displaceably guided in the longitudinal direction of the stand (14);
- a drive (22) for the slide (18);
- a control (50) for controlling the drive (22) and the vibration generator (21) that is connected to a force measuring device and to a distance measuring device; and
- an output device (52) for outputting operating parameters,
**characterized by**
- a reception device (30) which is provided at the slide (18) and into which a first workpiece holder (32) can be inserted;
- a first workpiece holder (32) that can be inserted into the reception device;
- a second workpiece holder (34, 36) that can be fastened to the base plate (12) or to the stand (14),
- wherein the control (50) is configured and adapted such that it is possible to switch manually and/or automatically between a machining cycle and a tensile test cycle.

2. A machine tool in accordance with claim 1,
**characterized in that**
the first workpiece holder (32) can be inserted into the reception device (30) without removing the working member (20).

3. A machine tool in accordance with claim 1 or claim 2,
**characterized in that**
the stand (14) is connected to the base plate (12).

4. A machine tool in accordance with claim 1, claim 2 and/or claim 3,
**characterized in that**
the control (50) has a speed regulation for the drive (22).

5. A machine tool in accordance with any one of the preceding claims,
**characterized in that**
the control (50) is configured and adapted such that it automatically switches over between a machining cycle and a tensile test cycle in fixable intervals.

6. A machine tool in accordance with claim 5,
**characterized in that**
the length of an interval can be fixed by the number of workpieces (W) machined after one another.

7. A machine tool in accordance with claim 5 and/or claim 6,
**characterized in that**
the length of an interval can be fixed in a randomly controlled manner by the control (50).

8. A machine tool in accordance with any one of the preceding claims,
**characterized in that**
the control (50) is configured and adapted such that it switches over into a tensile test cycle after a machining cycle during a machining period for a predetermined number of workpieces (W).

9. A machine tool in accordance with any one of the preceding claims,
**characterized in that**
the control (50) has an input device by which the further operating mode of the machine tool can be predefined in dependence on the result of at least one tensile test.

10. A machine tool in accordance with any one of the preceding claims,
**characterized in that**
the control (50) is configured and adapted such that an insufficient result of a tensile test can be output and such that in this case a subsequent predetermined number and order of machining cycles and tensile test cycles is predefined by the control.

11. A machine tool in accordance with any one of the preceding claims,
**characterized in that**
the output device (52) can be coupled, in particular wirelessly, to a mobile operating unit (54).

12. A machine tool in accordance with any one of the preceding claims,
**characterized in that**
it is blockable by the control (50) in dependence on results of the tensile test.

## Revendications

1. Machine (10) de traitement par ultrasons pour le soudage, la séparation et/ou le scellement de matériaux, comprenant :
- une plaque de base (12) ;
- un montant (14) qui peut être positionné par rapport à la plaque de base (12), sur laquelle une pièce à oeuvrer (W) peut être fixée ;
- un générateur de vibrations (21) permettant d'entraîner un organe de travail (20) ;
- un chariot (18) qui porte le générateur de vibrations (21) et qui est guidé mobile en translation dans la direction longitudinale du montant (14) ;
- un entraînement (22) pour le chariot (18) ;
- une commande (50) pour piloter l'entraînement (22) et le générateur de vibrations (21), qui est en liaison avec un dispositif de mesure de force et avec un dispositif de mesure de trajet ;
- un dispositif d'émission (52) pour émettre des paramètres de fonctionnement ;
**caractérisée par**
- un dispositif de logement (30) prévu sur le chariot (18), dans lequel un premier porte-pièce (32) peut être inséré,
- un premier porte-pièce (32) qui peut être inséré dans le dispositif de logement,
- un second porte-pièce (34, 36) qui peut être fixé à la plaque de base (12) ou au montant (14),
- la commande (50) étant réalisée et conçue de manière à permettre de commuter manuellement et/ou automatiquement entre un cycle de traitement et un cycle d'essai de traction.

2. Machine de traitement selon la revendication 1,
**caractérisée en ce que**
le premier porte-pièce (32) peut être inséré dans le dispositif de logement (30), sans enlever l'organe de travail (20).

3. Machine de traitement selon la revendication 1 ou 2,
**caractérisée en ce que**
le montant (14) est relié à la plaque de base (12).

4. Machine de traitement selon la revendication 1, 2 et/ou 3,
**caractérisée en ce que**
la commande (50) présente une régulation de vitesse pour l'entraînement (22).

5. Machine de traitement selon l'une des revendications précédentes,
**caractérisée en ce que**
la commande (50) est réalisée et conçue de manière à commuter automatiquement entre un cycle de traitement et un cycle d'essai de traction à des intervalles fixables.

6. Machine de traitement selon la revendication 5,
**caractérisée en ce que**
la longueur d'un intervalle peut être fixée par le nombre de pièces à oeuvrer (W) traitées les unes après les autres.

7. Machine de traitement selon la revendication 5 et/ou 6,
**caractérisée en ce que**
la longueur d'un intervalle peut être fixée de manière aléatoire par la commande (50).

8. Machine de traitement selon l'une des revendications précédentes,
**caractérisée en ce que**
la commande (50) est réalisée et conçue de manière à commuter dans un cycle d'essai de traction après un cycle de traitement, pendant une période de traitement pour un nombre prédéterminé de pièces à oeuvrer (W).

9. Machine de traitement selon l'une des revendications précédentes,
**caractérisée en ce que**
la commande (50) comprend un dispositif d'entrée permettant de définir la suite du mode de fonctionnement de la machine de traitement, en fonction du résultat d'au moins un essai de traction.

10. Machine de traitement selon l'une des revendications précédentes,
**caractérisée en ce que**
la commande (50) est réalisée et conçue de telle sorte qu'un résultat insuffisant d'un essai de traction peut être émis, et **en ce que**
dans ce cas, un nombre et un ordre chronologique de cycles de traitement et d'essai de traction prédéterminés suivants peuvent être définis par la commande.

11. Machine de traitement selon l'une des revendications précédentes,
**caractérisée en ce que**
le dispositif d'émission (52) peut être couplé, en particulier sans fil, à un appareil de manoeuvre mobile (54).

12. Machine de traitement selon l'une des revendications précédentes,
**caractérisée en ce que**
celle-ci peut être bloquée par la commande (50) en fonction des résultats de l'essai de traction.
